# EUROPÄISCHE PATENTANMELDUNG

(11) **EP 0 913 992 A2**
(43) Veröffentlichungstag der Anmeldung: **06.05.1999**
(21) Anmeldenummer: 98203586.7
(22) Anmeldetag: 23.10.1998
(51) Int. Cl.: H04N 5/262

(54) **Anordnung zum Mischen und/oder Bearbeiten von Videosignalen**

(30) Priorität: 31.10.1997 DE 19748139
(71) Anmelder: Philips Patentverwaltung GmbH, 22335 Hamburg (DE); Koninklijke Philips Electronics N.V., 5621 BA Eindhoven (NL)
(72) Erfinder: Deckelmann, Winfried, Röntgenstrasse 24, 22335 Hamburg (DE); Hasenzahl, Sieghard, c/o Philips Patentverwaltung, 22335 Hamburg (DE)
(74) Vertreter: von Laue, Hanns-Ulrich, Dipl.-Ing.

(57) **Zusammenfassung**

Für einen möglichst flexiblen Einsatz einer Anordnung 1 zum Mischen und/oder Bearbeiten eines oder mehrerer Videosignale ist vorgesehen, daß die Anordnung (1) Video-Hardware-Komponenten (2) aufweist, die jeweils für einen dedizierten Einsatzzweck ausgelegt sind und die innerhalb der Anordnung (1) ausschließlich für diesen jeweils fest zugeordneten Einsatzzweck einsetzbar sind, daß die Anordnung (1) Video-Rechner (3, 4) aufweist, die jeweils alternativ mehrere Funktion ausführen können und so innerhalb der Anordnung (1) bedarfsabhängig jeweils für verschiedene Einsatzzwecke einsetzbar sind, wobei die Video-Hardware-Komponenten (2) für Einsatzzwecke ausgelegt sind, die rechenintensiv sind und/oder einen hohen Bandbreitenbedarf haben, und die Video-Rechner (3, 4) für Einsatzzwecke vorgesehen sind, die die Video-Rechner (3, 4) in Echtzeit bearbeiten können, und daß innerhalb der Anordnung (1) eine Steuerung (6) vorgesehen ist, welche den Video-Rechnern (3, 4) jeweils bedarfsabhängige Aufgaben zuweist.

## Beschreibung

Die Erfindung betrifft eine Anordnung zum Mischen und/oder Bearbeiten eines oder mehrerer Videosignale.

Bei derartigen Anordnungen sind nach dem Stande der Technik für die verschiedenen Einsatzzwecke einer derartigen Anordnung fest zugeordnete Hardware-Komponenten vorgesehen. Dies macht den Einsatz derartiger Anordnungen unflexibel.

Es ist Aufgabe der Erfindung, eine Anordnung der eingangs genannten Art dahingehend weiterzuentwickeln, daß ein flexiblerer und vielseitigerer Einsatz ermöglicht wird.

Diese Aufgabe wird erfindungsgemäß dadurch gelöst, daß die Anordnung Video-Hardware-Komponenten aufweist, die jeweils für einen dedizierten Einsatzzweck ausgelegt sind und die innerhalb der Anordnung ausschließlich für diesen jeweils fest zugeordneten Einsattzweck einsetzbar sind, daß die Anordnung Video-Rechner aufweist, die jeweils alternativ mehrere Funktion ausführen können und so innerhalb der Anordnung bedarfsabhängig jeweils für verschiedene Einsatzzwecke einsetzbar sind, wobei die Video-Hardware-Komponenten für Einsatzzwecke ausgelegt sind, die rechenintensiv sind und/oder einen hohen Bandbreitenbedarf haben, und die Video-Rechner für Einsatzzwecke vorgesehen sind, die die Video-Rechner in Echtzeit bearbeiten können, und daß innerhalb der Anordnung eine Steuerung vorgesehen ist, welche den Video-Rechnern jeweils bedarfsabhängige Aufgaben zuweist.

Die Anordnung weist Elemente zweier verschiedener Kategorien auf. Zu einer ersten Kategorie gehören Video-Hardware-Komponenten, die jeweils für einen festgelegten Einsatzzweck ausgelegt sind und ausschließlich für diesen einsetzbar sind. Diese Video-Hardware-Komponenten sind für Einsatzzwecke vorgesehen, die durch andere Komponenten kaum erfüllt werden können, nämlich insbesondere solche die rechenintensiv sind bzw. die einen hohen Bandbreitenbedarf haben. Für derartige Einsatzzwecke können vorteilhaft nach wie vor dedizierte Video-Hardware-Komponenten eingesetzt werden.

Die Anordnung weist ferner Elemente einer zweiten Kategorier auf, nämlich Video-Rechner, die jeweils alternativ mehrere Funktionen ausführen können. Die Video-Rechner sind für solche Einsatzzwecke vorgesehen, die diese in Echtzeit bearbeiten können, d.h. ein zu bearbeitendes Videosignal muß in Echtzeit entsprechend der gewünschten der Anordnung bedarfsabhängig jeweils für verschiedene Einsatzzwecke einsetzbar sein. Somit muß nicht für jeden Einsatzzweck ein eigenes Element vorhanden sein; vielmehr können ein oder mehrere Video-Rechner alternativ für verschiedene Einsatzzwecke eingesetzt werden.

Innerhalb der Anordnung ist ferner eine Steuerung vorgesehen, welche den Video-Rechnern jeweils abhängig von dem Bedarf eine entsprechende Funktion zuordnet. Diese Funktion kann jederzeit geändert werden, so daß kurzfristig eine Umstellung bzw. Änderung der Funktion der Anordnung möglich ist.

Durch diese Gestaltung der Anordnung kann die Anordnung insgesamt flexibel eingesetzt werden, d.h. je nach Einsatzzweck kann sie in verschiedener Weise Video-Signale bearbeiten. Dies gelingt insbesondere durch den flexiblen Einsatz der Video-Rechner.

Der variable Einsatz der Video-Rechner, insbesondere wenn ihre Funktionen durch Software gesteuert werden, gestattet es, jederzeit zusätzliche und/oder neue Funktionen zu verwirklichen, da hierfür nur die Software zu ändern ist. Wie gemäß einer Ausgestaltung gemäß Anspruch 2 vorgesehen ist, können die Video-Hardware-Komponenten vorteilhaft als Video-Mischstufen oder Video-Kreuzschienen ausgebildet sein.

Die Flexibilität des möglichen Einsatzes der Video-Rechner für verschiedene Einsatzzwecke kann vorteilhaft dadurch erzielt werden, daß, wie gemäß Anspruch 3 vorgesehen ist, die gewünschte Funktion der Video-Rechner durch bedarfsabhängige ladbare Software aktivierbar ist.

Diese Software kann die Video-Rechner beispielsweise für Einsatzzwecke wie Chroma-Key-, Luma-Key- oder Trick-Effekte einsetzbar machen, wie gemäß Anspruch 4 vorgesehen ist.

Innerhalb der Anordnung sind die Video-Hardware-Komponenten und die Video-Rechner vorteilhaft mittels einer Verbindung gekoppelt, die eine hinreichend große Datenmenge bewältigen kann. Hierzu ist gemäß weiterer vorteilhafter Ausgestaltungen gemäß den Ansprüchen 5 und 6 vorgesehen, daß vorteilhaft ein Breitband-Bus-System oder eine Video-Kreuzschiene eingesetzt werden.

Insbesondere dann, wem die variablen Funktionen der Video-Rechner mittels Software aktiviert werden, können die Software-Rechner vorteilhaft, wie gemäß Anspruch 7 vorgesehen ist, Standard-Prozessoren aufweisen. Es kann sich sogar insgesamt um auf einem Board aufgebaute Standard-Rechner handeln, was die Anordnung besonders wirtschaftlich macht.

Eine weitere Ausgestaltung der Erfindung gemäß Anspruch 8 nutzt den möglichen flexiblen Einsatz der Video-Rechner bei einem kombinierten Einsatz mehrerer Anordnungen zum Mischen oder Bearbeiten eines oder mehrerer Videosignale. Bei einem derartigen kombinierten Einsatz kann wenigstens ein Video-Rechner wenigstens einer der Anordnungen variabel nicht nur bezüglich seines Einsatzzweckes, sondern auch bezüglich seines Einsatzes in einer der beiden Anordnungen eingesetzt werden, d.h. der Video-Rechner kann je nach Bedarf der einen oder der anderen Anordnung zugeschlagen werden und in dieser eine bedarfsabhängige Funktion erfüllen. Dies ist auch für mehrere Video-Rechner möglich, so daß grundsätzlich die Video-Rechner in mehreren gekoppelten Anordnungen variabel in einer oder mehrerer der Anordnungen einsetzbar sind. Hierdurch wird die Flexibilität des Einsatzes der Anordnungen weiter erhöht.

Nachfolgend wird anhand der einzigen Figur der Zeichnungen ein Ausführungsbeispiel näher erläutert.

Die einzige Figur zeigt ein Blockschaltbild einer Anordnung 1 zum Mischen und/oder Bearbeiten eines oder mehrerer Videosignale.

Innerhalb der Anordnung 1 sind Video-Hardware-Komponenten 2 vorgesehen. Die Video-Hardware-Komponenten sind jeweils für einen festgelegten Einsatzzweck ausgelegt und können innerhalb der Anordnung 1 ausschließlich den jeweils zugeordneten Einsatzzweck erfüllen. Hierbei handelt es sich insbesondere um solche Funktionen, die mittels Rechner nur schwer erfüllt werden können, nämlich um rechenintensive bzw. bandbreitenintensive Aufgaben. Hierbei kann es sich beispielsweise um das Mischen mehrerer Videosignale handeln. Die Video-Hardware-Komponenten 2 können daher insbesondere Video-Mischstufen oder Video-Kreuzschienen realisieren.

Innerhalb der Anordnung 1 sind ferner Video-Rechner 3 und 4 vorgesehen. Die Video-Rechner 3 und 4 sind im Gegensatz zu den Hardware-Komponenten 2 variabel einsetzbar. Sie können verschiedene Einsatzzwecke erfüllen. Die Video-Rechner 3 und 4 können beispielsweise durch bedarfsabhängig ladbare Software gesteuert werden, d.h. sie können je nach geladener Software verschiedene Funktionen erfüllen. Dadurch ist einerseits ihre Funktion individuell je nach Bedarf änderbar, andererseits sind durch geänderte Software jederzeit Änderungen der Funktionen möglich bzw. neue Funktionen durch neue Software realisierbar.

Innerhalb der Anordnung 1 ist ein Breitband-Bus 5 vorgesehen, mittels welchem die Video-Hardware-Komponenten 2 und die Video-Rechner 3 und 4 gekoppelt sind. Über diesen Breitband-Bus 5 können die Videodaten in unbearbeiteter oder bearbeiteter Form übertragen werden.

Innerhalb der Anordnung 1 ist ferner eine Steuerung 6 vorgesehen, welche insbesondere dazu vorgesehen ist, den Video-Rechnern 3 und 4 bedarfsabhängig die jeweils gewünschten Funktionen zuzuweisen. Beispielsweise kann durch die Steuerung 6 ein Laden der je nach gewünschter Funktion erforderlichen Software in den Video-Rechnern 3 und 4 ausgelöst werden.

Eine derartige Anordnung 1 kann insbesondere in Folge der variablen Funktionen der Video-Rechner 3 und 4 flexibel eingesetzt werden und kann jederzeit durch geänderte Software auch an neue gewünschte Funktionen angepaßt werden.

Diese Vorteile der Anordnung 1 gemäß der Figur können bei einem kombinierten Einsatz zweier oder mehrerer Anordnungen 1 noch gesteigert werden.

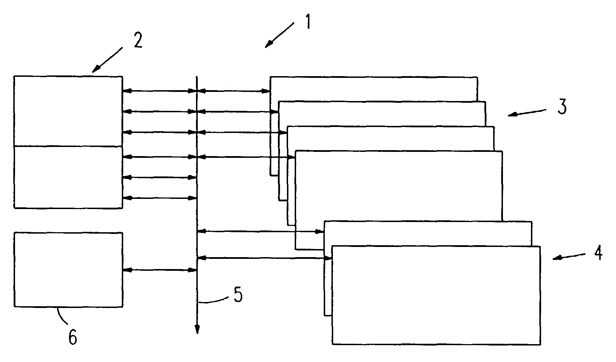

In diesem Falle sind mehrere Anordnungen entsprechend der Anordnung 1 in der Figur über den Breitband-Bus 5 in in der Figur nicht dargestellter Weise gekoppelt. In diesem Falle können vorteilhaft wenigstens einige der Video-Rechner, beispielsweise die Video-Rechner 4 der Anordnung 1 gemäß der Figur, variabel entweder in der einen Anordnung oder in der anderen Anordnung eingesetzt werden. Damit müssen innerhalb einer Anordnung weniger Video-Rechner vorgesehen sein, da sie bedarfsabhängig der einen Anordnung 1 oder der anderen Anordnung zum Bearbeiten von Videosignalen zur Verfügung gestellt werden können. Übertragen auf die Anordnung 1 gemäß der Figur bedeutet dies, daß beispielsweise die Video-Rechner 4 auch in einer anderen, in der Figur nicht dargestellten Anordnung eingesetzt werden können. Umgekehrt können Video-Rechner, die in einer in der Figur nicht dargestellten und mit der Anornung 1 gemäß Figur 1 mttels des Breitband-Busses 5 gekoppelten Anordnung vorgesehenen sind, auch in der Anordnung 1 gemäß der Figur eingesetzt werden.

Die Video-Rechner 3 und 4 können vorteilhaft insbesondere für solche Aufgaben eingesetzt werden, die mittels Rechnern in Echtzeit bearbeitet werden können. Hierbei kann es sich beispielsweise um Chroma-Key-, Luma-Key oder Trick-Effekte handeln.

## Patentansprüche

1. Anordnung (1) zum Mischen und/oder Bearbeiten eines oder mehrerer Videosignale, dadurch gekennzeichnet,
daß die Anordnung (1) Video-Hardware-Komponenten (2) aufweist, die jeweils für einen dedizierten Einsatzzweck ausgelegt sind und die innerhalb der Anordnung (1) ausschließlich für diesen jeweils fest zugeordneten Einsatzzweck einsetzbar sind, daß die Anordnung (1) Video-Rechner (3, 4) aufweist, die jeweils alternativ mehrere Funktion ausführen können und so innerhalb der Anordnung (1) bedarfsabhängig jeweils für verschiedene Einsatzzwecke einsetzbar sind, wobei die Video-Hardware-Komponenten (2) für Einsatzzwecke ausgelegt sind, die rechenintensiv sind und/oder einen hohen Bandbreitenbedarf haben, und die Video-Rechner (3, 4) für Einsatzzwecke vorgesehen sind, die die Video-Rechner (3, 4) in Echtzeit bearbeiten können, und daß innerhalb der Anordnung (1) eine Steuerung (6) vorgesehen ist, welche den Video-Rechnern (3, 4) jeweils bedarfsabhängige Aufgaben zuweist.

2. Anordnung nach Anspruch 1, dadurch gekennzeichnet,
daß die Video-Hardware-Komponenten (2) als Video-Mischstufen oder Video-Kreuzschienen ausgebildet sind.

3. Anordnung nach Anspruch 1, dadurch gekennzeichnet,
daß die jeweils gewünschte Funktion der Video-Rechner (3, 4) durch bedarfsabhängig ladbare Software aktivierbar ist.

4. Anordnung nach Anspruch 1, dadurch gekennzeichnet,
daß die Video-Rechner (3, 4) mit Software ladbar sind, die für Chroma-Key- oder Luma-Key- oder Trick-Effekte vorgesehen ist.

5. Anordnung nach Anspruch 1, dadurch gekennzeichnet,
daß die Video-Hardware-Komponenten (2) und die Video-Rechner (3, 4) mittels eines Breitband-Bus-Systems (5) gekoppelt sind.

6. Anordnung nach Anspruch 1, dadurch gekennzeichnet,
daß die Video-Hardware-Komponenten (2) und die Video-Rechner (3, 4) mittels einer Video-Kreuzschiene gekoppelt sind.

7. Anordnung nach Anspruch 1, dadurch gekennzeichnet,
daß die Video-Rechner (3, 4) Standard-Prozessoren aufweisen.

8. Anordnung mit wenigstens zwei Anordnungen (1) zum Mischen und/oder Bearbeiten eines oder mehrerer Videosignale gemäß Anspruch 1, dadurch gekennzeichnet,
daß zwischen den Anordnungen (1) zum Mischen und/oder Bearbeiten Video-Daten austauschbar sind und daß wenigstens eine der Anordnungen (1) zum Mischen und/oder Bearbeiten einen Video-Rechner (4) aufweist, der bedarfsabhängig einer der beiden Anordnungen (1) zum Mischen und/oder Bearbeiten zuordbar ist.
